Europäisches Patentamt

European Patent Office

Office européen des brevets

(19)

(11) Numéro de publication : **0 410 531 B1**

(12) **FASCICULE DE BREVET EUROPEEN**

(45) Date de publication du fascicule du brevet :
29.06.94 Bulletin 94/26

(51) Int. Cl.⁵ : **G02F 1/29**

(21) Numéro de dépôt : **90202007.2**

(22) Date de dépôt : **23.07.90**

(54) **Dispositif semiconducteur incluant un coupleur directionnel pour les composantes TE, TM.**

(30) Priorité : **28.07.89 FR 8910189**

(43) Date de publication de la demande :
**30.01.91 Bulletin 91/05**

(45) Mention de la délivrance du brevet :
**29.06.94 Bulletin 94/26**

(84) Etats contractants désignés :
**DE FR GB NL**

(56) Documents cités :
DE-A- 3 802 925
IEEE JOURNAL OF QUANTUM ELECTRONICS,
vol. QE-12, juillet 1976, pages 396-401; H.
KOGELNIK et al.: "Switch directional couplers
with alternating delta beta"

(56) Documents cités :
CONFERENCE ON LASERS AND ELECTRO-
OPTICS 1988, TECHNICAL DIGEST SERIES,
SUMMARIES OF PAPERS PRESENTED AT
THE CONFERENCE ON LASERS AND ELEC-
TRO-OPTICS, Anaheim, CA, 25-29 avril 1988,
vol. 7, pages 72,74; R.C. ALFERNESS:
"Eight-millimeter iong nonblocking 4 x 4 optical switch array"
PATENT ABSTRACTS OF JAPAN, vol. 9, no.
156 (P-368)[1879], 29 juin 1985; & JP-A-60 32
029

(73) Titulaire : **ALCATEL ALSTHOM RECHERCHE**
**Société Anonyme**
**Route de Nozay**
**91460 Marcoussis (FR)**

(72) Inventeur : **Angenent, Johannès, Société**
**Civile S.P.I.D.**
**156 Boulevard Haussmann**
**F-75008 Paris (FR)**
Inventeur : **Cavailles, Jean Aristide, Société**
**Civile S.P.I.D.**
**156 Boulevard Haussmann**
**F-75008 Paris (FR)**

(74) Mandataire : **Dalsace, Michel et al**
**c/o Sospi**
**14-16, rue de la Baume**
**F-75008 Paris (FR)**

EP 0 410 531 B1

## Description

L'invention concerne un dispositif semiconducteur intégré incluant un coupleur directionnel optoélectronique, ce coupleur comprenant deux guides de lumière rectilignes monomodes parallèles sur une longueur totale D, séparés par une petite distance $\underline{d}$ dite de couplage, guides dont au moins un reçoit à son extrêmité dite entrée un signal lumineux, ce coupleur comprenant aussi quatre électrodes de même type de conductivité disposées à raison de deux sur chaque guide et au moins une autre électrode de type de conductivité opposé, pour permettre la création d'un champ électrique dans les guides, et selon la valeur de ce champ électrique le passage de la lumière dans le guide opposé au guide d'entrée, correspondant à l'état dit croisé du coupleur, ou sa propagation dans le prolongement de la direction d'entrée, correspondant à l'état dit direct du coupleur.

L'invention trouve son application dans la réalisation de matrices de commutation utilisées dans le domaine des télécommunications.

Un coupleur directionnel formé de deux guides parallèles à rubans, est connu de la publication intitulée "Switched Directional Couplers with Alternating $\Delta_\beta$" par H. KOGELNIK et al. dans "IEEE Journal of Quantum Electronics, VOL-QE-12, N°7, July 1976". Ce document enseigne qu'un tel coupleur est caractérisé par sa longueur d'interaction et son coefficient de couplage. La longueur du couplage qui est dans un rapport inverse du coefficient de couplage indique la longueur minimal pour obtenir que la lumière passe entièrement d'un guide dans l'autre. La commutation est totale lorsque les constantes de propagation des guides sont égales, et lorsque la longueur d'interaction est un multiple impair de la longueur de couplage. Pour minimiser les exigences sur les dimensions du dispositif, la publication citée propose de disposer quatre électrodes sur les guides à raison de deux sur chaque guide, pour faire varier la constante de propagation dans chacun des guides, de manière, d'une part à commander la commutation par l'application de tension sur les électrodes et d'autre part à obtenir la commutation dans une large gamme de longueurs d'interaction du dispositif en agissant simplement sur les tensions appliquées aux électrodes.

Le défaut majeur et rédhibitoire du dispositif connu est qu'il est strictement limité à l'utilisation de faisceaux ne présentant qu'une seule des deux polarisations TE ou TM, TE étant la composante dite transverse électrique, c'est-à-dire dont la représentation schématique est un vecteur parallèle au plan du substrat sur lequel les guides sont intégrés et en même temps perpendiculaire à la direction de propagation, et TM étant la composante dite transverse magnétique dont la représentation schématique est un vecteur à la fois perpendiculaire au plan du substrat et à la direction de propagation de la lumière.

Le défaut inhérent au dispositif connu vient d'une part du fait que la longueur de couplage est différente pour chacune des polarisations TE et TM, et, d'autre part, que le déphasage induit par le changement d'indice dans les guides sous l'action d'un champ électrique dépend dans une très grande proportion de l'état de polarisation initial du faisceau qui se propage dans les guides, et en outre de l'orientation des guides sur le substrat, du moins lorsque les guides sont réalisés en matériau III-V.

Or il est connu que les fibres optiques habituellement utilisées dans les télécommunications ne maintiennent jamais un état de polarisation initial donné, sur une très grande longueur. Donc le faisceau qui arrive habituellement sur un dispositif optoélectronique intégré se trouve dans un état de polarisation aléatoire.

Dans ces conditions, le dispositif connu ne peut pas être utilisé.

D'autre part, les matériaux III-V constituent actuellement des matériaux d'avenir pour réaliser des guides de lumière, dans le domaine des télécommunications, du fait qu'ils sont semi-conducteurs, contrairement au niobate de lithium par exemple, et qu'ils permettent donc la réalisation de composants optoélectriques, ou bien de composants purement électroniques, en synergie de fabrication, intégrés sur le même substrat.

C'est pourquoi un objet de la présente invention est de fournir un coupleur directionnel qui est indépendant de l'état de polarisation initial du faisceau d'entrée. Le résultat dû à l'invention est obtenu lorsque, par l'application d'une première grandeur de champ électrique, les deux composantes TE et TM sortent conjointement par le guide opposé au guide d'entrée (état croisé) ou sortent conjointement par le prolongement du guide d'entrée (état direct), avec le minimum de pertes.

Un autre objet de l'invention est de fournir un coupleur réalisé en un matériau semiconducteur III-V.

Un autre objet de l'invention est de fournir un commutateur optoélectronique doté des mêmes performances que le coupleur.

Un autre objet de l'invention est de fournir une matrice réalisée au moyen du commutateur précédent.

Selon l'invention, ces problèmes sont résolus et ces buts sont atteints au moyen d'un dispositif tel que décrit dans le préambule de la revendication 1 et en outre caractérisé en ce que les paramètres structurels du coupleur sont tels que les relations suivantes sont vérifiées :

a) $Z = D/2$

b) $\varphi_{TE} \cdot L_{CTE} = \varphi_{TM} \cdot L_{CTM}$

c) $L_{CTM}/L_{CTE} = (1 - m/n) / \varepsilon \equiv k$

d) $D/L_{CTM} = [p\sqrt{8}/(1-\varepsilon k)] \{1/|\sin[p.\pi/(1-\varepsilon k)]|\}$

relations dans lesquelles :

Z est la dimension des électrodes telle que mesurée le long des guides,

$\varphi_{TM}$ et $\varphi_{TE}$ sont les déphasages provoqués par les changements d'indices dans les guides sous l'action d'un champ électrique respectivement pour la composante TM et pour la composante TE,

$L_{CTE}$ et $L_{CTM}$ sont les longueurs nécessaires pour que la composante de polarisation donnée, respectivement TE ou TM, introduite dans un guide passe dans l'autre guide, encore dites longueur de couplage pour TE et longueur de couplage pour TM,

m, n, p sont des entiers quelconques et

$\varepsilon = \pm 1$, de sorte que le coupleur présente un fonctionnement indépendant des composantes lumineuses transverses électriques et transverses magnétiques, respectivement TE et TM, contenues dans des proportions aléatoires dans le signal d'entrée.

L'invention sera mieux comprise au moyen de la description suivante illustrée par les figures annexées.

La figure 1 représente schématiquement, vu du dessus, un coupleur directionnel selon l'invention dans un exemple de réalisation.

La figure 2a représente schématiquement en coupe selon l'axe I-I de la figure 1, un guide de lumière muni d'une électrode, dans un exemple de réalisation ; et la figure 2b, le même guide en coupe selon l'axe II-II.

La figure 3a représente schématiquement, vu du dessus, un autre exemple de disposition des guides de lumière pour réaliser un coupleur selon l'invention ;

La figure 3b représente schématiquement, vu du dessus, un exemple de disposition des électrodes pour réaliser un coupleur au moyen des guides de la figure 3a.

La figure 4a montre schématiquement le trajet d'un faisceau d'entrée $F_1$ lorsque le coupleur est dans l'état croisé, vu du dessus ;

La figure 4b montre schématiquement, vu du dessus, le trajet d'un faisceau $F_1$ lorsque le coupleur est dans l'état direct ;

La figure 5a montre schématiquement, vu du dessus, les trajets de deux faisceaux $F_1$ et $F_2$ dans un commutateur fonctionnant selon le principe du coupleur précédent, dans l'état croisé ;

La figure 5b montre schématiquement, vu du dessus, les trajets de deux faisceaux $F_1$ et $F_2$ dans un commutateur fonctionnant selon le principe du coupleur des figures 4, dans l'état direct.

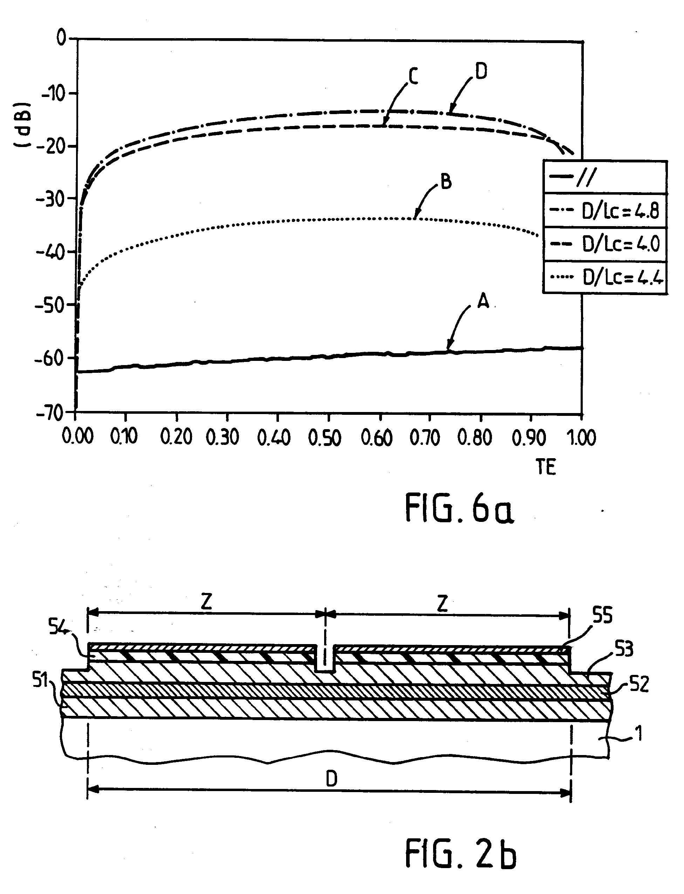

La figure 6a représente en ordonnée soit le rapport $P_1/P_2$ soit le rapport $P_2/P_1$ en dB, $P_1$ étant la puissance de sortie du premier guide du coupleur, et $P_2$ étant la puissance de sortie du second guide du coupleur, pour une puissance d'entrée $P_0 = 1$ dans le premier guide, en fonction du pourcentage de la composante TE à l'entrée. Parmi les courbes de la figure 6a, la courbe A représente le rapport $P_2/P_1$ lorsque le coupleur est dans l'état direct, et les courbes B, C, D représentent le rapport $P_1/P_2$ lorsque le coupleur est dans l'état croisé pour des valeurs respectives de $D/L_{CTE} = 4,4$ (courbe B), $D/L_{CTE} = 4,0$ (courbe C) et $D/L_{CTE} = 4,8$ (courbe D) dans les conditions des exemples I et II.

La figure 6b représente, toujours dans les conditions des exemples I et II, en fonction de la tension V appliquée entre les électrodes de type n et les électrodes de type p, représentée en abscisse, la puissance de sortie $P_1$ du guide d'entrée. La courbe E en trait plein montre la puissance de sortie de la composante TE, et la courbe F en pointillé montre la puissance de sortie du même guide, de la composante TM.

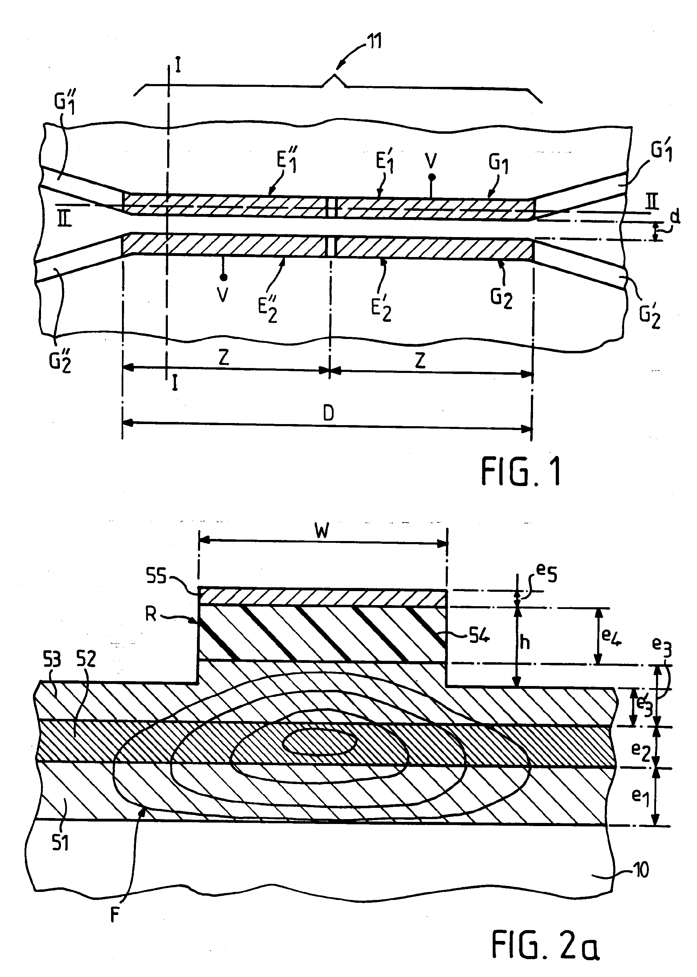

La figure 1 montre, réalisé sur un substrat 10, un dispositif semiconducteur intégré comprenant au moins un premier guide d'entrée $G'_1$, et éventuellement un second guide d'entrée $G'_2$, deux guides de sortie dont undit premier guide de sortie $G''_1$ et undit second guide de sortie $G''_2$, et un coupleur directionnel optoélectronique 11.

Le coupleur optoélectronique 11 comprend deux parties $G_1$ et $G_2$ de guide de lumière rectilignes, parallèles et de longueurs identiques D, dont la première est disposée de manière à raccorder le premier guide d'entrée $G'_1$ au premier guide de sortie $G''_1$ et dont la seconde $G_2$ est raccordée d'une part au second guide de sortie $G''_2$, et d'autre part au second guide d'entrée $G'_2$ quand il existe.

En surface de la première partie de guide rectiligne $G_1$, sont disposées deux électrodes identiques $E'_1$ et $E''_1$. En regard de ces électrodes, sur la seconde partie de guide rectiligne $G_2$, sont disposées deux autres électrodes identiques $E'_2$ et $E''_2$. Les électrodes ont pour longueur Z. Les quatre électrodes $E'_1$, $E''_1$, $E'_2$, $E''_2$ sont du même type de conductivité, par exemple p.

Le dispositif comprend en outre une ou plusieurs électrodes de type de conductivité opposé n, pour permettre la création d'un champ électrique dans les guides, par l'application de tension entre les électrodes p et n.

Notamment pour le fonctionnement du coupleur représenté sur la figure 1, on appliquera une première tension entre les électrodes n et p pour obtenir l'état dit direct ou parallèle, et une seconde tension pour obtenir l'état dit croisé.

Seules deux électrodes parmi celles qui sont réalisées en surface des guides seront utilisées, les deux autres n'étant présentes que pour la symétrie. On utilisera une seule électrode par guide, chaque électrode étant choisie pour n'être pas en vis-à-vis avec l'autre électrode utilisée. Ces deux électrodes du même type de conductivité doivent être reliées entre elles électriquement, pour l'application du potentiel entre elles et les électrodes du second type de conductivité.

Pour le fonctionnement du dispositif, aucun choix n'est imposé entre le couple $E'_1$, $E''_2$ et le couple $E''_1$, $E'_2$. Les électrodes du second type de conductivité sont disposées au mieux dans le dispositif pour produire le champ électrique recherché. Des exemples de réalisation seront donnés ultérieurement.

Le but de l'invention est donc de permettre l'utilisation d'un tel coupleur, non pas comme il est connu de l'état de la technique, en injectant un signal comprenant une seule composante TE ou TM, mais en injectant un signal qui comprend les deux composantes TE et TM dans des proportions aléatoires. Selon l'invention, la puissance totale injectée doit pouvoir être récupérée à la sortie du coupleur dans l'un ou l'autre guide selon que l'état est direct ou croisé.

Les buts de l'invention sont atteints si et seulement si les paramètres qui définissent la structure du coupleur permettent de vérifier des relations qui vont être établies ci-après.

On considéra comme connu de l'homme du métier de l'optoélectronique que pour une puissance $P_a$ injectée par exemple à l'entrée du guide $G_1$ au moyen du tronçon d'entrée $G'_1$ :

$$P_a = (1 - 2B^2)^2 \quad (1)$$

avec

$$B^2 = [K^2/(K^2 + \delta^2)] \sin^2\{\sqrt{K^2 + \delta^2} \cdot Z\} \quad (2)$$

et

$$K = \Pi/2L_c \quad (3)$$

$L_c$ étant la longueur de couplage d'une composante quelconque et encore

$$\delta = (\Pi/2)(\varphi/Z) \quad (4)$$

$\varphi$ étant le déphasage total le long de la longueur D.

Z étant la longueur d'une électrode disposée sur un des guides du coupleur.

Pour que les deux composantes TE et TM restent conjointement dans un seul guide, il faut que :
- Dans l'état croisé, la puissance $P_a$ de TE égale la puissance $P_a$ de TM et égale 0, ce qui s'écrit :

$$P_{aTE} = P_{aTM} = 0 \quad (5)$$

- Dans l'état parallèle, la puissance $P_a$ de TE égale la puissance $P_a$ de TM et égale 1, ce qui s'écrit :

$$P_{aTE} = P_{aTM} = 1 \quad (6)$$

Le déphasage est proportionnel à la longueur parcourue dans un guide, ce qui peut s'exprimer par :

$$\varphi = \xi D \quad (7)$$

où $\xi$ est un coefficient de proportionnalité.

Dans ce qui suit, les électrodes $E'_1$ et $E''_1$ d'une part, et $E'_2$ et $E''_2$ d'autre part sont très rapprochées, laissant entre elles un petit espace juste suffisant à éviter les courts-circuits. La dimension de ce petit espace est négligeable devant la longueur D. De cette manière on obtient que pour le fonctionnement du dispositif selon l'invention soit résolue une première condition :

$$a) \ Z = D/2 \quad (8)$$

où Z est la longueur de chacune des électrodes $E'_1$, $E''_1$, $E'_2$, $E''_2$.

Pour l'établissement des relations nécessaires au fonctionnement du dispositif, on posera :

$$k_1 = L_{CTM}/L_{CTE} \quad (9)$$
$$k_2 = \varphi_{TE}/\varphi_{TM} \quad (10)$$

$\varphi_{TM}$ et $\varphi_{TE}$ sont les déphasages provoqués par les changements d'indices dans les guides sous l'action d'un champ électrique respectivement pour la composante TM et pour la composante TE. Ce sont des grandeurs structurelles mesurables par des méthodes connues de l'homme du métier.

$L_{CTE}$ et $L_{CTM}$ sont les longueurs nécessaires pour que la composante de polarisation donnée respectivement TE ou TM introduite dans un guide passe dans l'autre guide, encore dite longueur de couplage pour TE et longueur de couplage pour TM. $L_{CTE}$ et $L_{CTM}$ sont des grandeurs structurelles mesurables par des méthodes connues de l'homme du métier.

On peut alors écrire à partir de la relation (2) pour la composante TE :

$$B^2 = (\alpha^2/(\alpha^2 + 4\varphi^2)) \sin^2\{(\pi/4)\sqrt{\alpha^2 + 4\varphi^2}\} \quad (11)$$

et pour la composante TM :

$$B^2 = \{(\alpha/k_1)^2/[(\alpha/k_1)^2 + 4(\varphi/k_2)^2]\} \sin^2\{(\pi/4)\sqrt{(\alpha/k_1)^2 + 4(\phi/k_2)^2}\} \quad (12)$$

où $\alpha = D/L_{CTE}$.

On a déjà exposé qu'il fallait que ces quantités soient égales pour TE et TM, dans les cas où le coupleur est dans l'état direct (ou parallèle) c'est-à-dire où $P_a = 1$, et dans le cas où le coupleur est dans l'état croisé c'est-à-dire $P_a = 0$. Cela impose que soient résolues les équations suivantes :

D'abord dans l'état direct (ou parallèle)

$$\left|\begin{array}{l} P_a = 1 \\ B = 0 \end{array}\right.$$

pour la composante TE :

$$\alpha^2 + 4\varphi_1^2 = 16 \, m_0^2 \text{ où } m_0 \text{ est un entier} \qquad (13)$$

et pour la composante TM :

$$(\alpha/k_1)^2 + 4(\varphi_1/k_1)^2 = 16 \, n_0 \text{ où } n_0 \text{ est un entier} \quad (14)$$

Ensuite dans l'état croisé :

$$\left|\begin{array}{l} P_a = 0 \\ B = 1/2 \end{array}\right.$$

pour la composante TE :

$$[\alpha^2/(\alpha^2 + 4\varphi_2^2)] \sin^2((\pi/4)\sqrt{\alpha^2 + 4\varphi_2^2}) = 1/2 \quad (15)$$

et pour la composante TM :

$$(\alpha/k_1)^2/[(\alpha/k_1)^2 + 4(\varphi_2/k_2)^2] \sin^2((\pi/4)\sqrt{(\alpha/k_1)^2 + 4(\varphi_2/k_2)^2}) = 1/2 \quad (16)$$

Dans les équations précédentes, $\varphi_1$ et $\varphi_2$ sont respectivement les déphasages nécessaires pour placer le coupleur dans l'état direct (ou parallèle) et dans l'état croisé pour la composante TE.

Il existe toute une famille de paramètres $k_1$, $k_2$ et $\alpha$ pour lesquels les équations (13) et (14) ont des solutions en $\varphi_1$ et $\varphi_2$. La détermination de cette famille de paramètres peut être faite numériquement par tout homme du métier d'une façon simple.

On décrit ci-après analytiquement, un cas particulier préféré selon lequel on remplit la condition :

$$k_1 = k_2 = k \quad (17)$$

c'est-à-dire la condition :

$$\text{b) } \varphi_{TE} \cdot L_{CTE} = \varphi_{TM} \cdot L_{CTM} \quad (18)$$

Ces conditions s'interprètent physiquement de la façon suivante : le déphasage cumulé sur une longueur égale à la longueur dite de couplage est indépendant de la polarisation.

Pour simplifier les calculs, on introduit de nouvelles relations. On pose :

$$\phi_C = \delta/K = \varphi \cdot L_C/Z$$

D'après l'hypothèse de départ $\varphi_C$ est indépendant de la polarisation, c'est-à-dire que :

$$\varphi_{CTE} = \varphi_{CTM} = \varphi_C \quad (19)$$

On exprime alors de nouveau les relations (11) et (12) :

$$B^2_{TE} = (1/(1+\phi_C^2)) \sin^2\{\sqrt{1+\phi_C^2} \, (D/L_{CTE})(\pi/4)\} \qquad (20)$$

$$B^2_{TM} = (1/(1+\phi_C^2)) \sin^2\{(\pi/4)(D/L_{CTM})\sqrt{1+\phi_C^2}\} \qquad (21)$$

Il en résulte que la condition $P_{aTE} = P_{aTM}$ est remplie si:

$$(\pi/4)(D/L_{CTM})\sqrt{1+\phi_C^2} = \varepsilon(\pi/4)(D/L_{CTE})\sqrt{1+\phi_C^2} + m_1\pi \quad (22)$$

ou $m_1$ est un entier et $\varepsilon = \pm 1$

5

On peut mettre la relation (22) sous la forme :

$$(\pi/4)(1-\varepsilon k_1)(D/L_{CTM})\sqrt{1+\Phi^2_C} = m_1\pi \qquad (23)$$

Cette condition dépend évidemment de $\varphi_C$. Dans le cas de l'invention, on cherche seulement à avoir $B_{TE} = B_{TM}$ dans les états directs et croisés.

Etude de l'état direct (ou parallèle)

L'état direct (ou parallèle) est défini par une certaine valeur de $\varphi_C$ que l'on notera $\varphi_{C1}$ et qui est telle que :

$$B^2_{TE} = B^2_{TM} = 0$$

ce qui entraîne à partir des relations (20) et (21) que :

$$1/(1+\Phi^2_{C1}) \sin^2\{(\pi/4)(D/L_{CTM})\sqrt{1+\Phi^2_{C1}}\} = 0 \qquad (24)$$

ou encore :

$$(\pi/4)(D/L_{CTM})\sqrt{1+\Phi^2_{C1}} = n\pi \qquad (25)$$

où n est un entier.

La relation (23) entraîne, pour avoir $B_{TE} = B_{TM}$

$$(1-\varepsilon k_1)\cdot(\pi/4)(D/L_{CTM})\sqrt{1+\varphi^2_{C1}} = m\pi \quad \text{où m est un entier} \quad (26)$$

Le rapport de la relation (26) à la relation (25) entraîne que :

$$(1 - \varepsilon k) = m/n \qquad (27)$$

où m et n sont des entiers.

On en tire la condition nécessaire à l'invention que :

$$c) \; k = (1 - m/n)/\varepsilon \qquad \text{avec m et n entiers et } \varepsilon = \pm 1. \qquad (28)$$

La condition (28) montre que si $k_1$ a la forme indiquée, alors il est possible d'observer simultanément les états directs (ou parallèles) pour les deux composantes TE et TM, et ce, quelle que soit la valeur des autres paramètres.

Etude de l'état croisé

L'état croisé est défini par une certaine valeur de $\varphi_c$ que l'on notera $\varphi_{c2}$ et qui est telle que :

$$B^2_{TE} = B^2_{TM} = 1/2$$

Ce qui entraîne à partir des relations (20) et (21) que :

$$1/(1+\Phi^2_{C2}) \sin^2\{(\pi/4) D/L_{CTM}) \sqrt{1+\Phi^2_{C2}}\} = 1/2 \qquad (29)$$

La relation (23) entraîne :

$$(1- \varepsilon k)^2 (D/L_{CTM})^2 [1/(m^2_2.16)] \sin^2 \{m_2.\pi/(1- \varepsilon k)\} = 1/2$$
$$\text{où } m_2 \text{ est un entier} \qquad (30)$$

d'où il résulte que :

$$(D/L_{CTM})^2 = 8 \; m_2^2 /(1- \varepsilon k)^2 [1/Sin^2 \{m_2 \pi/(1-\varepsilon k)\}]$$

$$\text{où } m_2 \text{ est un entier} \qquad (31)$$

$$\text{et } \varepsilon = \pm 1$$

D'où l'on tire la quatrième condition nécessaire à l'invention :

$$\text{d) } D/L_{CTM} = p.\sqrt{8}/(1 - \varepsilon k) \{1/|Sin [p.\pi/(1 - \varepsilon k)]|\} \quad (32)$$

où p est un entier et $\varepsilon = \pm 1$

On a donc un ensemble de valeurs permises données par la relation (32), pour le rapport $D/L_{CTM}$.

On remarquera qu'il n'y a de solution que si

$$(m_2 \pi)/(1 - \varepsilon k)$$

n'est pas multiple de $\pi$, c'est-à-dire si $m_2$ n'est pas un multiple de $1 - \varepsilon k$.

Conclusion de cette étude préliminaire

On peut construire un coupleur independant de la polarisation dans les deux états extrêmes directs et croisés toutes les fois que les conditions suivantes seront remplies :

$$\text{a)} \quad Z = D/2 \qquad (8)$$

$$\text{b)} \quad \varphi_{TE}. \; L_{CTE} = \varphi_{TM}.L_{CTM} \qquad (18)$$

$$\text{c)} \quad L_{CTM}/L_{CTE} = (1-m/n)/\varepsilon = k \qquad (28)$$

$$\text{d)} \quad D/L_{CTM} = p \sqrt{8}/(1- \varepsilon k).\{1/|sin [p \pi/(1- \varepsilon k)]|\} \quad (32)$$

$$\text{avec } m, \; n \text{ entiers quelconques, } p \text{ entier}$$

$$\varepsilon = \pm 1$$

toutes ces grandeurs étant mesurables par des techniques courantes connues de l'homme du métier.

Exemple de réalisation I

On réalisera de préférence l'invention en choisissant

$$k = 2 \quad (33)$$

(voir relations 9, 10 et 17)

d'où il résulte que la condition c) s'exprime par :

$$L_{CTM} = 2 \, L_{CTE} \quad (34)$$

Dans ce cas :

$$m = 3, n = 1, \varepsilon = -1 \quad (35)$$

Il en résulte que la condition d) s'exprime par :

$$D/L_{CTM} = p.\sqrt{8/3} \{1/ |Sin| \, p \, \pi/3 \, | \, |\}$$

ou encore

$$D/L_{CTM} = 1{,}089 \, p, \text{ où p entier} \quad (36)$$

On choisira de préférence

$$p = 2 \text{ d'où il vient la condition} \quad (37)$$

$$D/L_{CTM} \simeq 2{,}177 \quad (38)$$

On ne traitera pas les autres cas (k = 3 etc) que l'homme du métier peut mettre en oeuvre aisément sur le modèle de l'exemple 1 décrit ici.

De a), b), c) et d, il résulte que lorsque k = 2

$$\varphi_{TE} = 2 \, \varphi_{TM} \quad (39)$$

et que

$$D/L_{CTE} \simeq 4{,}354 \quad (40)$$

La longueur totale D du coupleur 11, la distance $\underline{d}$ qui sépare les parties rectilignes de guide $G_1$ et $G_2$ dans le coupleur, le choix des matériaux, leur dopage et la structure même des guides de lumière (guides à rubans externes ou autres) sont autant de facteurs sur lesquels l'homme du métier peut agir pour remplir les conditions de mise en oeuvre de cet exemple de réalisation qui sont maintenant posées par les relations (8), (34), (39) et (40) à savoir :

$$
\begin{aligned}
&\text{a)}\ Z = D/2 &(8)\\
&\text{b')}\ L_{CTM} = 2\ L_{CTE} &(34)\\
&\text{c')}\ \varphi_{TE} = 2\ \varphi_{TM} &(39)\\
&\text{d')}\ D/L_{CTE} \simeq 4{,}354 &(40)
\end{aligned}
$$

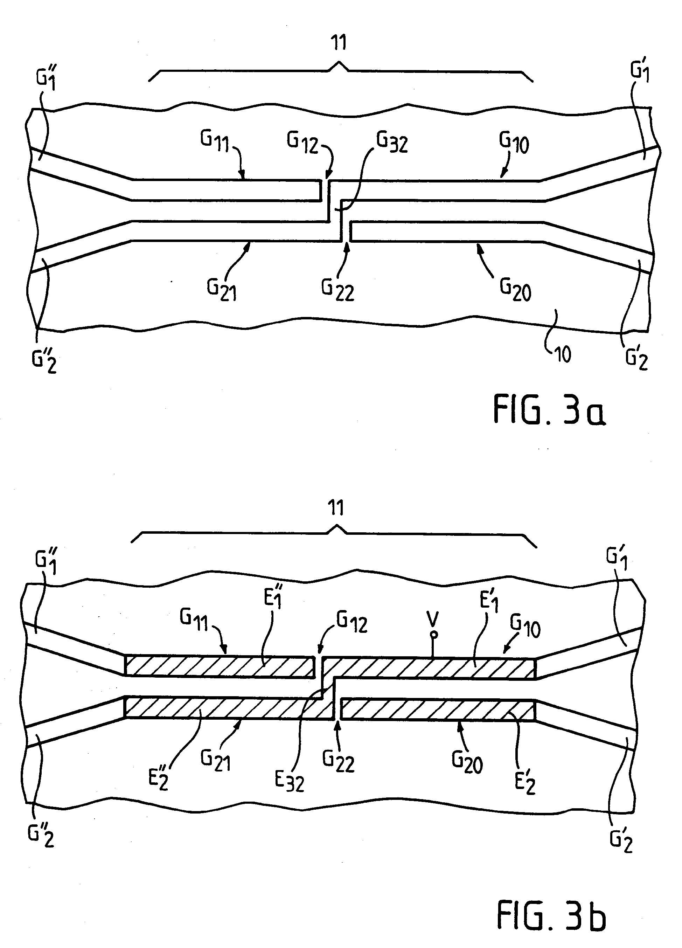

Dans cet exemple de réalisation I, le coupleur directionnel est schématiquement conforme à la figure 1 en ce qui concerne la vue du dessus. Il est schématiquement conforme à la figure 2a en ce qui concerne la vue en coupe transversale selon l'axe I-I, et schématiquement conforme à la figure 2b en ce qui concerne la vue en coupe longitudinale selon l'axe II-II.

Pour résoudre b') c'est-à-dire la proportionnalité voulu entre $L_{CTE}$ et $L_{CTM}$ l'homme du métier pourra agir sur la distance $\underline{d}$ de couplage qui sépare les parties rectilignes de guide $G_1$ et $G_2$, ainsi que sur la dimension transversale W des guides et la hauteur h du ruban, si la structure choisie inclut des guides à rubans.

Pour résoudre c'), c'est-à-dire la proportionnalité voulue entre $\varphi_{TE}$ et $\varphi_{TM}$, l'homme du métier pourra agir sur le choix des dopages des couches et la structure des guides formant le coupleur 11, ainsi que sur la direction des guides par rapport au substrat. Notamment les dopages de la couche guidante et des couches formant la structure p-n déterminant le changement d'indice par rapport à la tension appliquée entre les électrodes p-n et permet d'ajuster le rapport entre $\varphi_{TE}$ et $\varphi_{TM}$

Dans cet exemple I de réalisation, pour réaliser les conditions a), b'), c'), d') et tel que représenté en coupe transversale sur la figure 2a, chaque guide de lumière $G_1$, $G_2$ rectiligne du coupleur 11 comprend successivement :

A/ un substrat 10, qui peut être en un matériau III-V semi-isolant tel que GaAs ou InP, ou qui peut être en un matériau III-V de type de conductivité $n^+$, par exemple InP dopé à au moins $10^{17}$ at./cm³, par exemple $10^{18}$ at./cm³. Le substrat peut être aussi en silicium muni de couches d'adaptation de paramètres de maille aux matériaux III-V.

B/ une première couche épitaxiale 51 en phosphure d'indium InP, de type de conductivité $n^+$, obtenue par dopage à $10^{17}$ at/cm³. Si le substrat 10 est d'une structure différente, alors la couche 51 est indispensable et aura de préférence une épaisseur $e_1 \simeq 1\ \mu m$

C/ une seconde couche épitaxiale 52, dite couche guidante, en un matériau III-V de composition
$$Ga_x In_{1-x} As_y P_{1-y}$$
Dans cette composition, les concentrations x et y sont liées par la relation connue de l'homme du métier
$$x = 0{,}23\ y$$
On choisit de préférence la concentration
$$y = 0{,}6$$
La couche guidante 52 en GaInAsP est dopée également à $10^{17}$ at./cm³ pour obtenir le type de conductivité $n^+$. La longueur d'onde associée à l'énergie de bande interdite est alors $\lambda_{gap} = 1{,}3\ \mu m$, et la longueur d'onde de fonctionnement des guides est dans la bande choisie pour l'application aux télécommunications $\lambda_0 = 1{,}52\ \mu m$

La couche guidante 52 aura de préférence une épaisseur $e_2 \simeq 0{,}4\ \mu m$

D/ une troisième couche 53, en phosphure d'indium InP, de type de conductivité $n^-$, obtenue par dopage à $10^{16}$ at./cm³ au maximum. Cette couche 53 aura au moment de sa réalisation une épaisseur totale $e_3 \simeq 0{,}5\ \mu m$.

E/ une quatrième couche 54, en phosphure d'indium InP, de type de conductivité $p^+$, obtenue par dopage à $3.10^{17}$ at./cm³, destinée à former une jonction p-n avec la couche précédente 53. Cette quatrième couche 54 de type $p^+$ aura de préférence une épaisseur $e_4 \simeq 1{,}05\ \mu m$

Tel que représenté en coupe sur cette même figure 2, chaque guide comprend en outre une structure dite à ruban R, destinée à délimiter la région de guidage.

Le ruban R est généralement réalisé par la gravure des couches supérieures 54 et 53, par toute méthode de gravure de matériau III-V connue de l'homme du métier, mais de préférence par gravure sèche telle la méthode RIE qui permet d'obtenir des flancs plans et perpendiculaires aux couches. La hauteur de gravure, pour le guidage dans la couche 52, sera favorablement

   h = 1,2 µm

Il est important qu'il reste au-dessus de la couche guidante 52, une épaisseur de matériau 53

   $e'_3 \simeq 0,35$ µm

La dimension transversale $\underline{w}$ des rubans des guides sera favorablement de l'ordre de

   $w \simeq 3$ µm à 5 µm pour transporter une onde monomode

Ce sont les différences d'indices de réfraction, provoquées par les différences d'épaisseur dans la région munie du ruban et dans les régions de part et d'autre du ruban, qui font que la lumière reste dans la couche guidante 52 et sous le ruban R, et est donc "guidée". Du fait des différences d'indices induites par les différences d'épaisseur, tout se passe comme si la partie "guidée" était entourée de deux zones de plus bas indice servant au confinement. La figure 2 montre en coupe des lignes isoénergie qui en résultent pour des flux lumineux guidés F.

Enfin, les parties de guide rectilignes $G_1$ et $G_2$ sont munies d'une couche métallique 55, par exemple en or (Au), choisi du fait qu'il présente de faibles pertes optiques, d'épaisseur $e_5 \simeq 0,3$ µm pour réaliser les contacts de type p sur la couche supérieure 54 de type p. Ces contacts sont disposés pour former les électrodes $E'_1$, $E'_2$, $E''_1$, $E''_2$ comme montré sur la figure 1 vu du dessus, en prenant la précaution de prévoir un espacement d'environ 5 µm, dans la fourchette 2 à 20 µm, entre les électrodes $E'_1$, $E''_1$ et $E''_1$, $E''_2$ pour éviter les courts-circuits.

En fait une méthode favorable pour réaliser cette structure est de réaliser d'abord les électrodes en surface de la couche 54 puis de graver la couche 54 de type p et la partie supérieure de la couche 53 de type $n^-$ en se servant du métal des électrodes comme masque de gravure.

La figure 2b, qui est une couche selon l'axe II-II montre le dispositif obtenu au moyen de ce procédé de réalisation.

Pour pouvoir créer le champ électrique nécessaire au fonctionnement du dispositif il faut en outre disposer de contacts de type n.

Si le substrat est de type n, ces contacts peuvent être réalisés soit sur une face, soit sur l'autre du substrat. Si le substrat est d'un autre type, on pratiquera une ouverture dans les couches jusqu'à la première couche 51 de type n et on réalisera un contact $E_0$ de type n sur cette couche dans cette ouverture par toute méthode connue de l'homme du métier, par exemple au moyen d'un plot métallique, par exemple d'Or-Nickel (Au/Ni).

Les matériaux semiconducteurs III-V préconisés pour réaliser ce dispositif sont particulièrement favorables pour plusieurs raisons.

D'abord ils permettent la synergie de fabrication de différents dispositifs sur un même substrat.

Ensuite, il permettent les substrats en silicium (Si) peu onéreux, pour peu que l'homme du métier applique entre le substrat silicium et le dispositif III-V une méthode d'adaptation de maille dont un certain nombre est déjà à ce jour bien connu.

En outre, ils sont appropriés au domaine de longueur d'onde adapté aux télécommunications.

Dans cet exemple de réalisation, ces conditions a), b') c') d') sont vérifiées, avec la structure décrite précédemment pour

---

La distance de couplage entre guide d $\simeq$ 4,5 µm

La dimension transverse des guides W $\simeq$ 3 µm à 5 µm

$L_{CTE} \simeq 1,8$ mm

$L_{CTM} \simeq 3,6$ mm

$D = 8$ mm $\simeq 4,4$ $L_{CTE}$

$\varphi_{TE} \simeq 15°/Vmm$

$\varphi_{TM} \simeq 7,5°/Vmm$

---

Ces dernières données dépendent du dopage des couches d'une façon très importante.

En effet, lorsque l'on augmente le champ électrique dans la couche guidante 52, on déserte cette couche, ce qui diminue le dopage et augmente l'indice de réfraction dans ladite couche guidante. Cet effet est indépendant de la polarisation du faisceau lumineux.

Deux autres effets jouent aussi sur le changement d'indice dans les guides : l'effet Pockels qui est dépendant de la polarisation et n'agit que sur la composante TE ; et l'effet Kerr qui est indépendant de la polarisation;

Dans le cas de l'invention, l'effet dû au champ électrique sur la couche quaternaire est particulièrement intéressant. Il permet de changer l'indice de réfraction et le déphasage. C'est pourquoi le rapport $\varphi_{TM}/\varphi_{TE}$ dépend fortement du dopage de la couche quaternaire. Ce rapport dépend aussi de l'épaisseur des couches car, pour une même tension appliquée entre les électrodes, le champ électrique créé varie, si la distance entre les couches p et n sur lesquelles sont disposées les électrodes varie. La situation la plus avantageuse est celle où $\varphi_{TM}$ est le plus grand.

Dans ces conditions le coupleur se trouve dans l'<u>ETAT CROISE</u> par l'application d'une tension entre les électrodes n et p de

$$V_1 = -4,5 \text{ Volts}$$

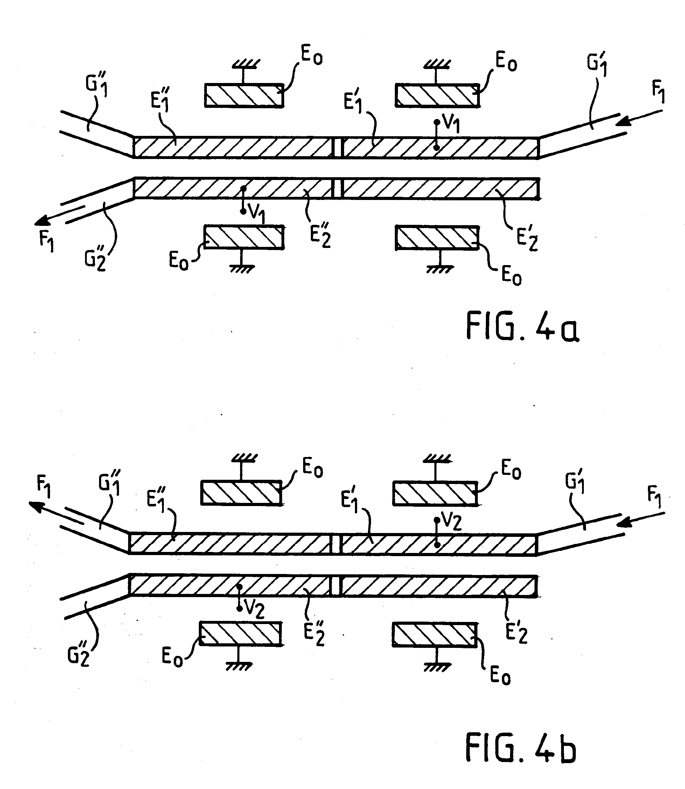

Dans cet état croisé, tel qu'illustré par la figure 4a, un flux $F_1$ de polarisation aléatoire étant injecté dans le guide d'entrée $G'_1$, les deux polarisations TE et TM sortent conjointement par le second guide de sortie $G''_2$.

On notera que l'on peut favorablement raccorder l'électrode de type n à la masse, et appliquer la tension $V_1$ à l'un des couples d'électrodes de type p $E'_1$, $E''_2$ ou $E''_1$, $E'_2$.

Avec les conditions pré-citées, le coupleur se trouve d'autre part dans l'<u>ETAT DIRECT</u> (ou PARALLELE) par l'application d'une tension entre les électrodes n et p de

$$V_2 = -10,1 \text{ Volts}$$

Dans cet état direct, tel qu'illustré par la figure 4b, un flux $F_1$ de polarisation aléatoire étant injecté dans le guide d'entrée $G'_1$, les deux polarisations TE et TM sortent conjointement par le premier guide de sortie $G''_1$. La tension $V_2$ peut être appliquée de la même façon que la tension $V_1$.

La figure 5a illustre le cas où le coupleur est muni d'un second guide d'entrée $G'_1$. Il peut alors fonctionner en commutateur. Par l'application de la tension

$$V_1 \simeq -4,5 \text{ Volts}$$

entre les électrodes, un flux $F_1$ entrant dans le guide d'entrée $G'_1$ sort par le guide opposé $G''_2$ et un flux $F_2$ entrant dans le guide d'entrée $G''_1$ sort par l'autre guide $G''_2$. Le commutateur est dans l'ETAT CROISE.

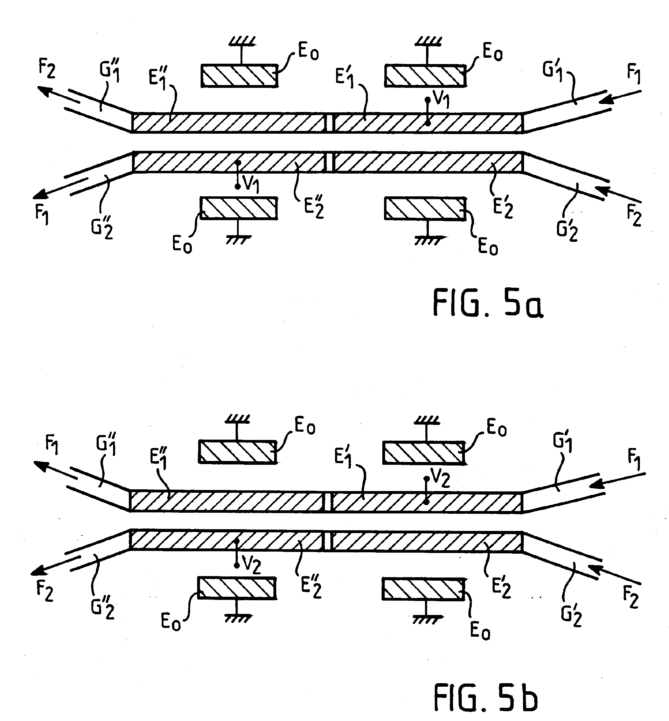

La figure 5b illustre le cas où ce commutateur est dans l'ETAT DIRECT par l'application de la tension

$$V_2 = -10,1 \text{ Volts}$$

entre les électrodes. Le flux $F_1$ entrant dans le guide d'entrée $G'_1$ continue son chemin dans la partie rectiligne $G_1$ et sort par le guide de sortie $G''_1$. De même le flux $F_2$ entrant dans le guide d'entrée $G'_2$, continue son chemin dans la partie rectiligne $G_2$ et sort par le guide de sortie $G''_2$.

Le coupleur fonctionne en commutateur en appliquant les tensions $V_1$ et $V_2$ exactement dans les mêmes conditions que décrites précédemment, c'est-à-dire entre un couple d'électrodes de type p par exemple $E'_1$, $E''_2$ ou bien $E'_2$, $E''_1$ et une électrode de type n éventuellement portée à la masse.

On notera qu'une seule électrode de type n suffit pour le fonctionnement du dispositif. En pratique, de préférence, pour diminuer la résistance et rendre le dispositif symétrique, on disposera quatre électrodes de type n le plus près possible des électrodes de type p, comme montré sur les figures 4 et 5.

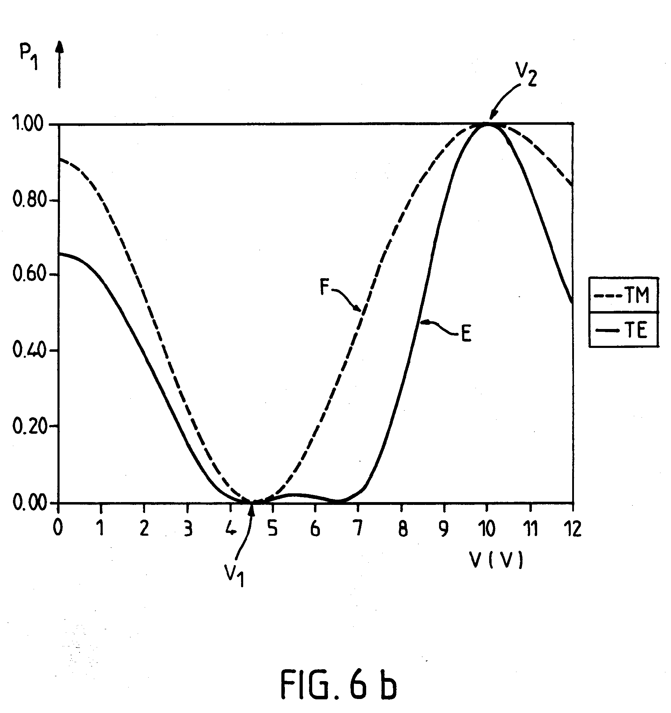

Les figures 6a et 6b illustrent les résultats que l'on peut attendre du coupleur ou commutateur décrit dans cet exemple I.

La figure 6a représente en ordonnée les rapports $P_2/P_1$ ou $P_1/P_2$ en dB, $P_1$ la puissance de sortie du premier guide du coupleur ou commutateur 11 en $G''_1$, et $P_2$ étant la puissance de sortie du second guide du coupleur ou commutateur 11 en $G''_2$, pour une puissance d'entrée $P_0 = 1$ dans le premier guide d'entrée $G'_1$, en fonction du pourcentage de la composante TE à cette entrée, dans les conditions où

$$\varphi_{TM}/\varphi_{TE} = 0,5 \text{ et } L_{CTM}/L_{CTE} = 2$$

Parmi les courbes de la figure 6a, la courbe A représente le rapport $P_2/P_1$ lorsque le coupleur est dans l'état direct (ou parallèle). Il faut comprendre que la représentation de la composante TE en abscisse indique que si dans le signal d'entrée de puissance $P_0$, la composante TE représente 100 %, alors la composante TM représente 0 % et vice-versa. La courbe A montre que le rapport est de l'ordre de -60 dB et qu'il dépend à la fois très peu de l'état de polarisation initiale et très peu du rapport $D/L_{CTE}$.

La courbe B, en pointillés courts, montre le rapport $P_1/P_2$ dans le cas où le coupleur ou commutateur est dans l'état croisé. Cette courbe B montre que le rapport est de l'ordre de -35 dB lorsque le rapport $D/L_{CTE} = 4,4$. Cette courbe montre donc la conformité des résultats obtenus avec les résultats escomptés.

Les courbes C et D en pointillés plus longs, montrent le rapport $P_1/P_2$ dans le cas où le coupleur ou commutateur est dans l'état croisé et dans les cas respectifs où les rapport $D/L_{CTE}$ égalent 4,0 et 4,8. Le rapport $P_1/P_2$ est alors de -15 dB, ce qui est encore tout à fait acceptable et même très bon pour bien des applications.

On conclura donc que le dispositif donne des résultats tout à fait satisfaisants dans la fourchette

$$4,0 < D/L_{CTE} < 4,8$$

En s'éloignant de ces valeurs, il faut s'attendre à de moins bons résultats. Ces courbes enseignent à l'homme du métier à choisir les meilleures conditions pour une application particulière envisagée.

Les courbes de la figure 6b représentent en ordonnée la puissance $P_1$ en sortie du premier guide en $G''_1$ lorsque la puissance d'entrée $P_0$ est injectée en $G'_1$, en fonction de la tension V (volt) appliquée entre les électrodes de type n et p, et dans les conditions où

$$D/L_{CTE} = 4,4$$
$$D = 8 \ mm$$
$$\varphi_{TM}/\varphi_{TE} = 0,5$$
$$L_{CTM}/L_{CTE} = 2$$
$$\varphi_{TE} = 15°/V.mm$$

La courbe E en trait plein représente les variations de la composante TE et la courbe F en pointillé les variations de la composante TM.

Ces courbes montrent que dans les conditions ci-dessus, et pour la tension $V_1 = -4,5$ V, il n'y a plus aucune lumière dans le prolongement du premier guide de sortie $G''_1$, toute la lumière se trouvant dans le second guide de sortie $G''_2$, aussi bien pour la polarisation TE que pour la polarisation TM, et que pour cette valeur $V_1$ on est dans l'état croisé.

Ces courbes enseignent d'autre part que pour une valeur $V_1 = -10,1$ Volts, les deux composantes TE et TM sortent conjointement par le premier guide de sortie $G''_1$ et que l'on se trouve dans l'état direct (ou parallèle).

Ces courbes montrent enfin qu'en l'absence de toute tension appliquée entre les électrodes n et p, c'est-à-dire pour V = 0 volt, seulement une partie des composantes TE et TM est guidée par le premier guide $G'_1$, $G_1$, $G''_1$. Le reste du signal est perdu ou passe dans $G''_2$.

Exemple de réalisation II

Les courbes des figures 6a et 6b montrent que les dimensions du dispositif 11 ne sont pas critiques au point de rendre sa mise en oeuvre malaisée. Bien au contraire. Aussi dans l'exemple de réalisation II on profite du fait que le dispositif donne de bons résultats dans une gamme de dimensions assez large pour présenter un dispositif de forme particulièrement ingénieuse rendant la mise en oeuvre encore plus aisée.

Cet exemple est illustré par les figures 3a et 3b.

Comme la longueur du dispositif 11 est D = 8 mm, on peut se permettre sur la longueur Z = D/2 = 4 mm des électrodes un petit décalage de quelques μm.

Le dispositif 11 est réalisé selon le procédé de réalisation décrit précédemment dans l'exemple I. Les métallisations d'électrodes $E'_1$, $E'_2$, $E'_1$, $E''_2$ servent de masques pour graver les rubans des guides jusque dans la couche $n^-$53 afin d'éviter les courts-circuits par la couche p.

Grâce à ce procédé, on réalise une coupure $G_{12}$ dans le ruban du guide $G_1$ pour obtenir deux parties $G_{10}$ et $G_{11}$ seulement séparée par environ 5 μm comme il a été dit dans l'exemple I, coupure qui ne peut dans ces conditions perturber le faisceau. On fait de même dans le ruban du guide $G_2$ une coupure $G_{22}$, laissant entre les deux coupures le passage pour un tronçon de ruban $G_{32}$ couvert d'une couche métallique 55 qui raccorde les deux électrodes $E'_1$ et $E''_2$ d'une façon simple. Le signal n'est pas non plus perturbé par le tronçon $G_{32}$ et il suffit alors d'un seul plot électrique pour appliquer la tension sur le couple d'électrode $E'_1$, $E''_2$. La dimension transversale de la connexion $G_{32}$, $E_{32}$ sera favorablement de l'ordre de 3 à 5 μm.

Evidemment le raccordement entre les électrodes peut être réalisé au choix entre $E'_1$, $E''_2$, ou bien entre

$E''_1$, $E'_2$, le couple non raccordé ne servant pas.

Les tronçons de guide d'entrée $G'_1$, $G'_2$ et de sortie $G''_1$, $G''_2$ ont été dessinés quelconque sur les diverses figures. En effet pour obtenir les résultats attendus du coupleur ou commutateur, il suffit que ces guides soient distants d'une grandeur très supérieure à la distance de couplage $\underline{d}$ après une distance petite devant la longueur de couplage.

Les commutateurs selon l'invention sont tout particulièrement destinés à réaliser des matrices de commutation à N entrées et N sorties, comme il est connu par exemple de la publication "Photonic switches and switch areas on $LiNbO_3$" dans "Optical and quantum electronics, 21, 1989 par A. SELVARAJAN et J.E. MIDWINTER édité par CHAPMAN et alii, pages 1 à 15, avec l'avantage qu'il n'est pas nécessaire de sélectionner une composante TE ou TM avant l'entrée dans la matrice, pour obtenir le fonctionnement de cette dernière.

**Revendications**

1.   Dispositif semiconducteur intégré incluant un coupleur directionnel optoélectronique, ce coupleur comprenant deux guides de lumière rectilignes monomodes de dimension transverse W et parallèles sur une longueur totale D séparés par une petite distance d dite de couplage, guides dont au moins un reçoit à son extrêmité dite entrée un signal lumineux, ce coupleur comprenant aussi quatre électrodes de même type de conductivité disposées à raison de deux sur chaque guide et au moins une autre électrode de type de conductivité opposé, pour permettre la création d'un champ électrique dans les guides et, selon la valeur de ce champ électrique, le passage de la lumière dans le guide opposé au guide d'entrée, correspondant à l'état dit croisé du coupleur, ou sa propagation dans le prolongement de la direction d'entrée, correspondant à l'état dit direct du coupleur, caractérisé en ce que les paramètres structurels du coupleur, qui comprennent d, W et D, sont tels que les relations suivantes sont vérifiées :

a) $Z = D/2$

b) $\varphi_{TE} \cdot L_{CTE} = \varphi_{TM} \cdot L_{CTM}$

c) $L_{CTM}/L_{CTE} = (1 - m/n) / \varepsilon \equiv k$

d) $D/L_{CTM} = [p\sqrt{8}/(1-\varepsilon k)] \{1/|\sin[p.\pi/(1-\varepsilon k)]|\}$

relations dans lesquelles :

Z est la dimension des électrodes telle que mesurée le long des guides,

$\varphi_{TM}$ et $\varphi_{TE}$ sont les déphasages provoqués par les changements d'indices dans les guides sous l'action d'un champ électrique respectivement pour la composante TM et pour la composante TE,

$L_{CTE}$ et $L_{CTM}$ sont les longueurs nécessaires pour que la composante de polarisation donnée, respectivement TE et TM, introduite dans un guide, passe dans l'autre guide, encore dites longueur de couplage pour TE et longueur de couplage pour TM,

m, n, p sont des entiers quelconques et

$\varepsilon = \pm 1$, de sorte que le coupleur présente un fonctionnement indépendant des composantes lumineuses transverses électriques et transverses magnétiques, respectivement TE et TM, contenues dans des proportions aléatoires dans le signal d'entrée.

2.   Dispositif selon la revendication 1, caractérisé en ce que l'on choisit les différents paramètres structurels du coupleur pour que :

k = 2 d'où

b') $L_{CTM} = 2 L_{CTE}$

c') $\varphi_{TE} = 2 \varphi_{TM}$

d') $D/L_{CTE} \simeq 4,354$

3.   Dispositif selon la revendication 2, caractérisé en ce que parmi les paramètres structurels du coupleur on choisit :

- la distance de couplage entre guides d $\simeq 4,5$ μm
- la dimension transverse des guides W $\simeq 3$ à 5 μm
- la dimension totale longitudinale du coupleur

D = 8 mm

avec $4,0\ L_{CTE} \leqq D \leqq 4,8\ L_{CTE}$

- la dimension des électrodes Z = D/2 $\simeq 4$ mm

4.   Dispositif selon la revendication 3, caractérisé en ce que les guides sont formés d'une couche guidante quaternaire de formule

$Ga_xIn_{1-x}As_yP_{1-y}$ dans laquelle x et y sont des concentrations liées par la relation x = 0,23y, couche quaternaire disposée entre deux couches de phosphure d'indium (InP) sur un substrat de maille adaptée, le dopage de la couche quaternaire étant de type $n^+$ de l'ordre de $10^{17}$ at/cm$^3$, le dopage de la couche inférieure d'InP étant de type n de l'ordre de $10^{17}$ at/cm$^3$, le dopage de la couche supérieure d'InP étant de type n de l'ordre de $10^{16}$ at/cm$^3$, la couche supérieure d'InP étant surmontée d'une couche d'InP dopée p à $3.10^{17}$ at/cm$^3$, en ce que des rubans de guidage sont formés dans la couche supérieure de type p jusqu'à la couche d'InP de type n, et en ce que les électrodes sont réalisées d'une part en surface des rubans de type p et d'autre part en surface de parties de la couche d'InP inférieure de type n.

5. Dispositif selon la revendication 4, caractérisé en ce que l'épaisseur de la couche guidante quaternaire est de l'ordre de $e_2 \simeq 0,4$ µm, l'épaisseur de la couche d'InP de type $n^-$ supérieure est de l'ordre de $e_3 \simeq 0,5$ µm dans la région du ruban et $e'_3 \simeq 0,35$ µm à l'extérieur du ruban, l'épaisseur de la couche supérieure de type p du ruban est de l'ordre de $e_4 \simeq 1,05$ µm, la hauteur du ruban sous les électrodes de type p est de l'ordre de $h \simeq 1,2$ µm, le ruban étant interrompu entre deux électrodes consécutives réalisées sur le même guide pour éviter les courts-circuits par la couche de type p.

6. Dispositif selon la revendication 5, caractérisé en ce que

$\varphi_{TM} = 7,5°/V$ mm

$\varphi_{TE} = 15°/V$ mm

en ce que pour appliquer le potentiel nécessaire à la création du champ électrique, on utilise, outre les électrodes de type n, seulement un couple formé de deux électrodes de type p, ayant une situation diamétralement opposée sur les guides à raison d'une par guide, et en ce que l'application entre les électrodes n et p d'un potentiel

$V_1 = -4,5$ V met le coupleur dans l'état croisé

et

$V_2 = -10,1$ V met le coupleur dans l'état direct (parallèle).

7. Dispositif selon la revendication 6, caractérisé en ce que dans la composition de la couche quaternaire la concentration y = 0,6.

8. Dispositif selon l'une des revendications 6 à 7, caractérisé en ce que dans l'intervalle dépourvu de ruban qui sépare deux électrodes consécutives de type p sur un même guide rectiligne du coupleur, est disposé un tronçon de guide à ruban muni de la couche métallique d'électrode de type p, pour raccorder électriquement les deux électrodes utiles du couple de type p.

9. Dispositif selon l'une des revendications précédentes, caractérisé en ce que le substrat est choisi parmi les matériaux semiconducteurs du groupe III-V et le silicium, ce dernier étant muni de couches d'adaptation de maille aux matériaux III-V.

10. Dispositif selon l'une des revendications 1 à 9, caractérisé en ce que les deux guides du coupleur sont aptes à recevoir à leur entrée un signal lumineux pour assurer la fonction de commutateur optoélectronique.

11. Procédé de réalisation d'un dispositif selon l'une des revendications 1 à 10, caractérisé en ce que la couche métallique formant les électrodes de type p sert de masque pour délimiter les rubans de guidage dans la région du coupleur ou commutateur.

**Patentansprüche**

1. Integrierte Halbleitervorrichtung mit einem optoelektronischen Richtkoppler, der zwei geradlinige Monomode-Lichtleiter einer Querabmessung W besitzt, wobei diese Lichtleiter über eine Gesamtlänge D mit einem geringen Kopplungsabstand d parallel verlaufen und wobei mindestens einer an seinem Eingangsende ein Lichtsignal empfängt, wobei der Koppler weiter vier Elektroden gleichen Leitfähigkeitstyps, von denen je zwei auf jedem Lichtleiter angeordnet sind, und mindestens eine weitere Elektrode des entgegengesetzten Leitfähigkeitstyps besitzt, um ein elektrisches Feld in den Lichtleitern zu erzeugen und um je nach dem Wert dieses elektrischen Felds das Licht aus dem dem Eingangslichtleiter gegenüberliegenden Lichtleiter entsprechend einem gekreuzten Kopplungszustand oder in der Verlängerung der Eingangsrichtung entsprechend dem direkten Kopplungszustand austreten zu lassen, dadurch gekennzeichnet, daß die Strukturparameter des Kopplers, die die Werte d, W und D enthalten, so gewählt sind, daß folgende Beziehungen erfüllt sind:

a) $Z = D/2$

b) $\varphi_{TE} \cdot L_{CTE} = \varphi_{TM} \cdot L_{CTM}$

c) $L_{CTM}/L_{CTE} = (1 - m/n)/\varepsilon = k$

d) $D/L_{CTM} = [p\sqrt{8}/(1-\varepsilon k)]/|\sin[p.\pi/(1-\varepsilon k)]|$

wobei folgende Bedeutungen gelten:

Z ist die Abmessung der Elektroden entlang der Lichtleiter;

$\varphi_{TM}$ und $\varphi_{TE}$ sind die durch die Veränderungen des Brechungsindex in den Lichtleitern unter der Wirkung eines elektrischen Felds in der Komponente TM bzw. der Komponente TE hervorgerufenen Phasenverschiebungen;

$L_{CTE}$ und $L_{CTM}$ sind die Kopplungslängen, die notwendig sind für die gegebene Polarisationskomponente TE bzw. TM, die in den Lichtleiter eingespeist wird, damit diese Komponente in den anderen Lichtleiter übertreten kann; diese Längen werden auch Kopplungslängen für TE bzw. TM genannt;

m, n, p sind beliebige ganze Zahlen und

$\varepsilon = \pm 1$

derart, daß der Koppler einen von den elektrischen und magnetischen transversalen Lichtwellenkomponenten TE bzw. TM, die in zufälligen Anteilen im Eingangssignal vorhanden sind, unabhängigen Betrieb ergibt.

2. Vorrichtung nach Anspruch 1, dadurch gekennzeichnet, daß man die verschiedenen strukturellen Parameter des Kopplers so wählt, daß gilt:

$k = 2$　　daher:

b') $L_{CTM} = 2 L_{CTE}$

c') $\varphi_{TE} = 2 \varphi_{TM}$

d') $D/L_{CTE} = 4{,}354$

3. Vorrichtung nach Anspruch 2, dadurch gekennzeichnet, daß unter den Strukturparametern des Kopplers folgende Auswahl getroffen wird:
- der Kopplungsabstand d zwischen den Lichtleitern beträgt 4,5 $\mu$m,
- der Querabstand W der Lichtleiter beträgt zwischen 3 und 5 $\mu$m,
- die Gesamtlänge D des Kopplers beträgt 8 mm, wobei gilt $4{,}0 \, L_{CTE} \leqq D \leqq 4{,}8 \, L_{CTE}$,
- die Abmessung Z der Elektroden beträgt $D/2 \approx 4$ mm.

4. Vorrichtung nach Anspruch 3, dadurch gekennzeichnet, daß die Lichtleiter aus quaternären lichtführenden Schichten gebildet werden, gemäß der Formel $Ga_xIn_{1-x}As_yP_{1-y}$, wobei x und y Konzentrationen sind, die durch die Gleichung $x = 0{,}23y$ verknüpft sind und die quaternäre Schicht zwischen zwei Schichten aus Indiumphosphid (InP) auf ein Substrat eines geeigneten Gitterabstands aufgebracht ist, wobei die Dotierung der quaternären Schicht vom Typ $n^+$ bei etwa $10^{17}$ at/cm$^3$, die Dotierung der unteren Schicht aus InP vom Typ n bei etwa $10^{17}$ at/cm$^3$, die Dotierung der oberen Schicht aus InP vom Typ n bei etwa $10^{16}$ at/cm$^3$ liegt und wobei die obere Schicht aus InP von einer Schicht aus InP einer Dotierung vom Typ p mit $3.10^{17}$ at/cm$^3$ bedeckt ist, daß lichtführende Bänder in der oberen Schicht des Typs p bis zur Schicht aus InP vom Typ n ausgebildet sind und daß die Elektroden einerseits auf der Oberfläche der Bänder vom Typ p und andererseits auf der Oberfläche der Bereiche der unteren Schicht aus InP vom Typ n ausgebildet sind.

5. Vorrichtung nach Anspruch 4, dadurch gekennzeichnet, daß die Dicke $e_2$ der quaternären lichtführenden Schicht etwa 0,4 $\mu$m, die Dicke $e_3$ der oberen Schicht aus InP vom Typ $n^-$ etwa 0,5 $\mu$m in der Bandzone und die entsprechende Dicke $e'_3$ außerhalb der Bandzone etwa 0,35 $\mu$m beträgt, daß die Dicke $e_4$ der oberen Schicht vom Typ p des Bandes etwa 1,05 $\mu$m und die Höhe h des Bandes unter der Elektrode des Typs p etwa 1,2 $\mu$m beträgt, wobei das Band zwischen zwei aufeinanderfolgenden, auf demselben Lichtleiter ausgebildeten Elektroden unterbrochen ist, um Kurzschlüsse durch die Schicht des Typs p zu vermeiden.

6. Vorrichtung nach Anspruch 5, dadurch gekennzeichnet, daß gilt

$\varphi_{TM} = 7{,}5°/V$ mm

$\varphi_{TE} = 15°/V$ mm

und daß man für das Anlegen des für die Erzeugung des elektrischen Felds notwendigen Potentials außer den Elektroden des Typs n nur zwei Elektroden des Typs p verwendet, die diametral auf den Lichtleitern einander gegenüberliegen, und zwar auf je einem der Leiter, und daß der Koppler durch Anlegen einer Spannung $V_1$ von -4,5V zwischen die Elektroden n und p der Koppler in den gekreuzten Zustand und durch Anlegen einer Spannung $V_2$ von -10,1V in den direkten (parallelen) Zustand gebracht wird.

7. Vorrichtung nach Anspruch 6, dadurch gekennzeichnet, daß in der Zusammensetzung der quaternären Schicht die Konzentration y mit 0,6 gewählt wird.

8. Vorrichtung nach einem der Ansprüche 6 und 7, dadurch gekennzeichnet, daß in dem bandfreien Intervall zwischen zwei aufeinanderfolgenden Elektroden des Typs p auf einem gemeinsamen geradlinigen Lichtleiter des Kopplers ein Abschnitt eines bandförmigen Lichtleiters mit der Metallschicht der Elektrode des Typs p vorgesehen ist, um die beiden genutzten Elektroden des Elektrodenpaars des Typs p miteinander elektrisch zu verbinden.

9. Vorrichtung nach einem der vorhergehenden Ansprüche, dadurch gekennzeichnet, daß das Substrat unter den Halbleitermaterialien der Gruppe III-V und aus Silizium ausgewählt wird, wobei letzteres eine Gitteranpassungsschicht zur Anpassung an die Materialien der Gruppe III-V besitzt.

10. Vorrichtung nach einem der Ansprüche 1 bis 9, dadurch gekennzeichnet, daß die beiden Lichtleiter des Kopplers an ihrem Eingang ein Lichtsignal empfangen können, um die Funktion eines optoelektronischen Schalters zu gewährleisten.

11. Verfahren zur Herstellung einer Vorrichtung nach einem der Ansprüche 1 bis 10, dadurch gekennzeichnet, daß die Metallschicht, die die Elektroden des Typs p bildet, als Maske zur Begrenzung der lichtführenden Bänder in der Koppler- oder Schalt-Zone dient.

## Claims

1. An integrated semiconductor device including an opto-electronic directional coupler, the coupler comprising two monomode rectilinear light guides, which are of transverse dimension W, which are parallel over a total length D, and which are separated by a short "coupling" distance $\underline{d}$, at least one of the guides receiving a light signal at its "input" end, the coupler further comprising four electrodes having the same conductivity type and disposed two on each guide, and at least one other electrode having the opposite conductivity type, so as to make it possible to create an electric field in the guides, and, depending on the value of the electric field, to allow light either to pass into the guide that is opposite from the input guide, corresponding to the "crossed" state of the coupler, or to continue to propagate in the input direction, corresponding to the "through" state of the coupler, said device being characterized in that the structural parameters of the coupler, which parameters include $\underline{d}$, W, and D, are such that the following relationships are valid:

a) $Z = D/2$
a) $\varphi_{TE} \cdot L_{CTE} = \varphi_{TM} \cdot L_{CTM}$
c) $L_{CTM}/L_{CTE} = (1 - m/n) / \varepsilon \equiv k$
d) $D/L_{CTM} = [p\sqrt{8}/(1-\varepsilon k)] \{1/\left| \sin[p.\pi/(1-\varepsilon k)] \right| \}$

in which relationships:

Z is the dimension of the electrodes as measured along the guides;

$\varphi_{TM}$ and $\varphi_{TE}$ are the phase shifts caused by the changes in indices in the guides under the action of an electric field, respectively for the TM component, and for the TE component;

$L_{CTE}$ and $L_{CTM}$ are the lengths required to cause the given polarization components, respectively TE and TM, inserted into a guide, to pass into the other guide, these lengths also being referred to as the "TE coupling length" and the "TM coupling length";

$\underline{m}$, $\underline{n}$, and $\underline{p}$, are arbitrary integers; and

$\varepsilon = \pm 1$;

so that the coupler operates independently of the transverse electric component TE of the light and of the transverse magnetic component TM of the light, which components are contained in random proportions in the input signal.

2. A device according to claim 1, characterized in that the various structural parameters of the coupler are chosen so that:

k = 2
whence:

b') $L_{CTM} = 2 L_{CTE}$

c') $\varphi_{TE} = 2 \varphi_{TM}$

d') $D/L_{CTE} \approx 4.354$

3. A device according to claim 2, characterized in that the following structural parameters are chosen for the coupler:

the coupling distance between the guides $d \approx 4.5$ $\mu$m;

the transverse dimension of the guides $W \approx 3$ $\mu$m to 5 $\mu$m; and

the total longitudinal dimension of the coupler $D = 8$ mm;

where $4.0$ $L_{CTE} \leqq D \leqq 4.8$ $L_{CTE}$; and

the dimension of the electrodes $Z = D/2 \approx 4$ mm.

4. A device according to claim 3, characterized in that the guides are made out of a quaternary guiding layer having the following formula:

$Ga_x In_{1-x} As_y P_{1-y}$

in which formula x and y are concentrations linked by the relationship x = 0.23y;

said quaternary layer being disposed between two layers of indium phosphide (InP) on a substrate having a matched lattice, the doping in the quaternary layer being of the $n^+$ type and about $10^{17}$ at/cm$^3$, the doping in the bottom layer of InP being of the n-type and about $10^{17}$ at/cm$^3$, the doping in the top layer of InP being of the n-type and about $10^{16}$ at/cm$^3$, a layer of InP that is p-doped at $3.10^{17}$ at/cm$^3$ overlying the top layer of InP, in that guiding ridges are formed in the p-type top layer down to the n-type layer of InP, and in that the electrodes are provided both at the surfaces of the p-type ridges and also at the surfaces of portions of the n-type bottom layer of InP.

5. A device according to claim 4, characterized in that the thickness of the quaternary guiding layer is of the order $e_2 \approx 0.4$ $\mu$m, the thickness of the $n^-$ type top layer of InP is of the order $e_3 \approx 0.5$ $\mu$m in the region of the ridge and $e'_3 \approx 0.35$ $\mu$m outside the ridge, the thickness of the p-type top layer of the ridge is of the order $e_4 \approx 1.05$ $\mu$m, the height of the ridge under the p-type electrodes is of the order $h \approx 1.2$ $\mu$m, the ridge being interrupted between two consecutive electrodes provided on the same guide so as to avoid short-circuits via the p-type layer.

6. A device according to claim 5, characterized in that:

$\varphi_{TM} = 7.5°/V$ mm

$\varphi_{TE} = 15°/V$ mm

in that for applying the potential required to create the electric field, in addition to using the n-type electrodes, only one pair formed of two p-type electrodes is used, the two p-type electrodes being diametrically opposed on the guides and being one per guide, and in that applying potential having the following values between the n electrodes and the p electrodes has the following effects:

$V_1 = -4.5$ V puts the coupler in the crossed state; and

$V_2 = -10.1$ V puts the coupler in the through (parallel) state.

7. A device according to claim 6, characterized in that, in the composition of the quaternary layer, the concentration y = 0.6.

8. A device according to any one of claims 6 to 7, characterized in that, so as to connect together electrically the two useful electrodes of the p-type pair, a ridge guide segment provided with the p-type electrode metal layer is disposed in the ridge-free gap that separates two consecutive p-type electrodes on the same rectilinear guide of the coupler.

9. A device according to any preceding claim, characterized in that the substrate is chosen from semiconductor materials of the III-V group, and silicon which is provided with layers for matching the lattice to the III-V materials.

10. A device according to any one of claims 1 to 9, characterized in that both guides of the coupler are capable of receiving light signals at their inputs, so as to perform the function of an opto-electronic switch.

11. A method of making a device according to any one of claims 1 to 10, said method being characterized in that the metal layer forming the p-type electrodes serves as a mask to delimit the guide ridges in the region of the coupler or of the switch.

FIG. 1

FIG. 2a

FIG. 3a

FIG. 3b

FIG. 4a

FIG. 4b

FIG. 5a

FIG. 5b

FIG. 6a

FIG. 2b

FIG. 6 b